# EUROPÄISCHE PATENTSCHRIFT

(11) **EP 3 850 720 B1**
(45) Veröffentlichungstag und Bekanntmachung des Hinweises auf die Patenterteilung: **07.12.2022**
(21) Anmeldenummer: 19786491.1
(22) Anmeldetag: 01.10.2019
(51) Int. Cl.: H02J 3/18

(54) **MAGNETISCH REGELBARE DROSSELSPULE IN REIHENSCHALTUNG**
MAGNETICALLY CONTROLLABLE INDUCTOR COIL IN A SERIES CIRCUIT
BOBINE D'ÉTRANGLEMENT RÉGLABLE MAGNÉTIQUEMENT DANS UN MONTAGE EN SÉRIE

(30) Priorität: 29.10.2018 DE 102018218477
(43) Veröffentlichungstag der Anmeldung: 21.07.2021
(73) Patentinhaber: Siemens Energy Global GmbH & Co. KG, 81739 München (DE)
(72) Erfinder: FRITSCHE, Ronny, 91235 Hartenstein OT Rupprechtstegen (DE); KÜSTERMANN, Matthias, 90408 Nürnberg (DE); MANTHE, Thomas, 17373 Ueckermünde (DE)
(86) Internationale Anmeldenummer: PCT/EP2019/076538
(87) Internationale Veröffentlichungsnummer: WO 2020/088870

(56) Entgegenhaltungen:
- EP-A1- 3 168 708
- WO-A1-87/04538
- CN-A- 104 810 837

## Beschreibung

Die Erfindung betrifft eine Vorrichtung zur Blindleistungskompensation in einem wenigstens einen Phasenleiter aufweisenden Hochspannungsnetz mit wenigstens einem ersten Hochspannungsanschluss, der zur Verbindung mit jeweils einem Phasenleiter eingerichtet ist, wobei für jeden Hochspannungsanschluss ein erster und ein zweiter Kernabschnitt, die Teil eines geschlossenen Magnetkreises sind, eine erste Hochspannungswicklung, die den ersten Kernabschnitt umschließt und eine zweite Hochspannungswicklung, die den zweiten Kernabschnitt umschließt und parallel zur ersten Hochspannungswicklung geschaltet ist, wenigstens ein Sättigungsschaltzweig, der zum Sättigen der Kernabschnitte eingerichtet ist und ansteuerbare Leistungshalbleiterschalter aufweist, und eine Steuerungseinheit zum Ansteuern der Leistungshalbleiterschalter vorgesehen sind, wobei die erste und die zweite Hochspannungswicklung mit ihrem Hochspannungsende mit dem zugeordneten Hochspannungsanschluss verbunden und an ihrer Niederspannungsseite mit einem oder dem Sättigungsschaltzweig verbindbar sind.

Eine solche Vorrichtung ist aus der EP 3 168 708 A1 bereits bekannt. Dort ist ein so genannter "Full Variable Shunt Reactor" (FVSR) offenbart. Die vorbekannte Vorrichtung verfügt über zwei einander parallel geschaltete Hochspannungswicklungen je Phase, die jeweils einen Kernschenkel eines geschlossenen Eisenkerns umschließen und an ihrem Hochspannungsende an einen Phasenleiter eines Hochspannungsnetzes angeschlossen sind. Die Niederspannungsseiten der Hochspannungswicklungen sind mit Hilfe eines Transistorschalters entweder mit einem zweckmäßig polarisierten Umrichter oder direkt mit einem Erdanschluss verbindbar. Der Umrichter ist zum Erzeugen eines Gleichstroms in der mit ihm verbundenen Hochspannungswicklung eingerichtet. Dabei wird der Gleichstrom so eingestellt, dass der von der Wicklung umschlossene Kernschenkel in einen gewünschten Sättigungszustand getrieben wird. In diesem Sättigungszustand weist das Kernmaterial beispielsweise eine sehr kleine magnetische Permeabilität auf, wodurch sich der magnetische Widerstand der Wicklung erhöht und deren Induktivität abgesenkt wird. Die Sättigung der besagten Kernabschnitte ist polarisationsabhängig, so dass ein über die Wicklungen fließender Wechselstrom je nach seiner Polarisierung im Wesentlichen nur über eine der beiden Hochspannungswicklungen fließt. So fließt beispielsweise ein positiver Wechselstrom über die erste Hochspannungswicklung während ein negativer Wechselstrom über die zweite Hochspannungswicklung zur Erde hin abfließt. Wird der Strom nur über eine Hochspannungswicklung getrieben, kann die jeweils andere Wicklung, die gerade nicht vom Wechselstrom durchströmt wird, mit einem Gleichstrom beaufschlagt werden, um den von ihr umschlossenen Kernschenkel in dem gewünschten Maß zu sättigen.

Die WO 87/04538 A1 beschreibt eine Vorrichtung mit Thyristoren, die seriell in ein Hochspannungsnetz geschaltet wird. Weiterer Stand der Technik ist in der CN 104 810 837 A offenbart.

Der vorbekannten Vorrichtung haftet der Nachteil an, dass diese nur in Parallelschaltung mit dem oder den Phasenleitern des Versorgungsnetzes verbunden werden kann. Bei einer parallel geschalteten Vorrichtung ist diese mit ihrer einen Seite an das Hochspannungspotenzial des Phasenleiters angeschlossen, wobei die vom Hochspannungsanschluss abgewandte Seite auf Erdpotenzial liegt.

Aufgabe der Erfindung ist es, eine Vorrichtung der eingangs genannten bereitzustellen, bei seriell ins Hochspannungsnetz geschaltet werden kann.

Die Erfindung löst diese Aufgabe dadurch, dass ein zweiter Hochspannungsanschluss vorgesehen ist, der ebenfalls zur Verbindung mit jeweils einem Phasenleiter vorgesehen ist, wobei der Sättigungsschaltzweig an seiner von den oder der Hochspannungswicklung abgewandten Seite mit dem zweiten Hochspannungsanschluss verbunden ist, so dass die Vorrichtung in Reihe in den jeweiligen Phasenleiter schaltbar ist, und dass die Hochspannungswicklungen und der Sättigungsschaltzweig durch einen Überbrückungszweig überbrückbar sind, wobei in dem Überbrückungszweig eine kapazitive Einheit angeordnet ist, wobei dem Überbrückungszweig ein Schutzzweig parallel geschaltet ist, in dem ein nichtlinearer Widerstand angeordnet ist.

Im Rahmen der Erfindung ist der zweite Anschluss der Vorrichtung, der beim Stand der Technik auf Erdpotenzial liegt, ein Hochspannungsanschluss. Dieser zweite Hochspannungsanschluss ist ebenfalls zur Verbindung mit dem Phasenleiter vorgesehen, so dass die gesamte Vorrichtung in Reihe in den jeweiligen Phasenleiter geschaltet ist. Dabei ist im Rahmen der Erfindung der Sättigungsschalterzweig an seiner von den Hochspannungswicklungen abgewandten Seite mit dem zweiten Hochspannungsanschluss verbunden. Der Sättigungsschaltzweig kann im Rahmen der Erfindung direkt, also ohne Zwischenschaltung weiterer Komponenten oder Bauteile, mit dem zweiten Hochspannungsanschluss verbunden sein. Alternativ dazu ist es im Rahmen der Erfindung jedoch auch möglich, weitere Komponenten im Strompfad zwischen dem Sättigungsschaltzweig und dem zweiten Hochspannungsanschluss anzuordnen.

Die in Reihe geschaltete Vorrichtung ist beispielsweise zum Teil auf einer Plattform angeordnet, wobei einige der beim Betrieb auf einer Hochspannung liegenden Komponenten auf einer Plattform aufgeständert sind. Andere Komponenten, die auf Hochspannung liegen, können hingegen im Tank angeordnet, der auf Erdpotential liegt und auf dem Boden abgestellt ist. Zwischen den auf der Plattform angeordneten Komponenten treten Spannungsabfälle, beispielsweise im Mittelspannungsbereich von 1 kV bis 50 kV, auf. Diese Mittelspannungsabfälle sind jedoch im Vergleich zu Hochspannungsabfällen in der Regel 100 kV bis 800 kV kostengünstiger zu handhaben, wobei die dazu verwendeten Komponenten aus der Mittelspannungstechnik bekannt sind. Auf der Hochspannungsplattform können im Rahmen der Erfindung weitere Komponenten, beispielsweise kapazitive Bauteile und dergleichen, angeordnet sein.

Gemäß einer ersten Variante der Erfindung sind die erste und zweite Hochspannungswicklung mit dem ersten Hochspannungsanschluss verbunden. Zwischen dem ersten Hochspannungsanschluss und den Hochspannungswicklungen können zusätzliche Bauteile oder Komponenten zugeordnet sein.

Vorteilhafterweise ist der zweite Hochspannungsanschluss über wenigstens eine kapazitive Einheit mit dem Sättigungsschaltzweig verbunden. Als kapazitive Einheit werden hier Komponenten, wie beispielsweise Kondensatoren oder dergleichen, bezeichnet, die kapazitiv wirken, wobei die Phase des Stromes der Phase der Spannung vorauseilt. Induktiv wirkende Einheiten oder Bauteile erzeugen den gegenteiligen Effekt, so dass der Strom der Spannung nacheilt.

Erfindungsgemäß sind die Hochspannungswicklungen und der Sättigungsschaltzweig durch einen Überbrückungszweig überbrückbar, wobei in dem Überbrückungszweig eine kapazitive Einheit angeordnet ist. Wie bereits ausgeführt wurde, stellt die erfindungsgemäße Vorrichtung einen so genannten "Full Variable Shunt Reactor" (FVSR) dar. Mit Hilfe des Sättigungsschaltzweiges ist es möglich, den Kern der Hochspannungswicklungen zu sättigen, so dass aufgrund der induktiven Wirkung der Hochspannungswicklungen in der jeweiligen Halbwelle Blindleistung in dem Versorgungsnetz, das aus dem beziehungsweise den Phasenleitern aufgebaut ist, kompensiert werden kann. Um nicht nur die induktiven Wirkungen der Hochspannungswicklungen bereitstellen zu können, ist eine kapazitive Einheit vorgesehen, die parallel zum Sättigungsschaltzweig und den Hochspannungswicklungen geschaltet ist. Aufgrund dieser Parallelschaltung kann die Bandbreite der Regelung vergrößert werden.

Im Rahmen der Erfindung ist dem Überbrückungszweig ein Schutzzweig parallel geschaltet, in dem ein nichtlinearer Widerstand angeordnet ist. Der Schutzzweig dient zum Schutz vor Überspannungen, die im Fehlerfall auftreten können und insbesondere die Leistungshalbleiterschalter des Sättigungsschaltzweiges zerstören können. Der nichtlineare Widerstand weist im normalen Spannungsbereich, also im Bereich der Betriebsspannung, eine geringe Leitfähigkeit und somit einen hohen Widerstand auf. Bei Überspannungen wird der Widerstand jedoch herabgesetzt, so dass die hohen Spannungen durch den Widerstand abgebaut werden. Die parallel geschalteten Komponenten, also die Hochspannungswicklung und insbesondere der Sättigungsschaltzweig, sind daher vor Überspannungen geschützt.

Gemäß einer bevorzugten Variante der Erfindung ist die kapazitive Einheit als Kondensator oder als Kondensatorbatterie ausgerüstet. Eine Kondensatorbatterie umfasst mehrere seriell und parallel miteinander verschaltete Transformatoren, die als Gesamteinheit wie ein Kondensator wirken. Ein Kondensator im Strompfad bewirkt, dass die Phase eines Wechselstroms der Phase der treibenden Spannung vorauseilt.

Gemäß einer bevorzugten Variante der Erfindung ist jede Hochspannungswicklung und jeder Sättigungsschaltzweig in einem mit einem Isolierfluid befüllten Tank angeordnet. Gemäß einer Variante sind Hochspannungswicklungen und Sättigungsschaltzweig in dem gleichen Tank angeordnet. Im Rahmen der Erfindung ist es jedoch auch möglich, dass die Hochspannungswicklungen und die Leistungselektronik des Sättigungsschaltzweiges in unterschiedlichen Tanks oder Gehäusen angeordnet sind. Dabei sind beide Gehäuse mit einem Isolierfluid befüllt, wobei Durchführungen vorgesehen sind, um die elektrische Verbindung der in dem Tank angeordneten Komponenten miteinander zu ermöglichen. Als Isolierfluid kommt beispielsweise ein mineralisches Öl, ein Esteröl oder dergleichen in Betracht. Es können unterschiedliche Isolierfluids in verschiedenen Tanks vorgesehen sein. Bevorzugt ist jedoch das Isolierfluid in allen Tanks das gleiche. Das Isolierfluid kann abweichend davon auch als Schutzgas ausgeführt sein.

Vorzugsweise verfügt jeder Sättigungsschaltzweig über wenigstens ein zweipoliges Submodul mit einer Brückenschaltung, die über Leistungshalbleiterschalter und eine Gleichspannungsquelle verfügt, so dass je nach Ansteuerung der Leistungshalbleiterschalter die Gleichspannungsquelle entweder in Reihe zu wenigstens einer Hochspannungswicklung schaltbar oder überbrückbar ist. Die Gleichspannungsquelle stellt bei zweckmäßiger Ansteuerung der Leistungshalbleiterschalter dann die notwenigen Spannungen und Gleichströme zum Sättigen des Kerns der Hochspannungswicklungen bereit.

Bevorzugt ist jedes Submodul als Vollbrückenschaltung ausgebildet, die einen ersten Reihenschaltungszweig und einen zweiten Reihenschaltungszweig aufweist, die der Gleichspannungsquelle jeweils parallel geschaltet sind. Jeder Reihenschaltungszweig weist eine Reihenschaltung aus zwei Leistungshalbleiterschaltern auf, wobei der Potenzialpunkt zwischen den Leistungshalbleiterschaltern des ersten Reihenschaltungszweiges mit einer ersten Anschlussklemme des Submoduls und der Potenzialpunkt zwischen den Leistungshalbleiterschaltern des zweiten Reihenschaltungszweigs mit der zweiten Anschlussklemme des Submoduls verbunden ist. Vollbrückenschaltungen ermöglichen eine Polarisationsumkehr an den Anschlussklemmen, die mit einer so genannten Halbbrückenschaltung, die lediglich einen Parallelzweig mit zwei Leistungshalbleiterschaltern aufweist, nicht möglich ist.

Bevorzugt ist jeder Leistungshalbleiterschalter ein IGBT mit gegensinnig parallel geschalteter Freilaufdiode, ein so genannter GTO oder ein Transistorschalter. Vorteilhaft ist im Rahmen der Erfindung, dass jeder Leistungshalbleiterschalter sowohl von seiner Unterbrecherstellung, in der ein Stromfluss über den Leistungshalbleiterschalter nicht möglich ist, in seine Durchlassstellung oder umgekehrt überführbar ist, in der ein Stromfluss über den Leistungshalbleiterschalter ermöglicht ist. Solche Leistungshalbleiterschalter werden auch abschaltbare Leistungshalbleiterschalter genannt, die sogar einen über sie fließenden Kurzschlussstrom unterbrechen können, wenn geeignete Maßnahme getroffen wurden, um die dabei entstehenden Energien abzubauen.

Bevorzugt ist jede Gleichspannungsquelle ein Energiespeicher. Als Energiespeicher kommen vorteilhafterweise elektrische Energiespeicher in Betracht, die vorzugsweise unipolar sind. So kommen als Energiespeicher beispielsweise Kondensatoren, Superkondensatoren, supraleitende Spulen, Batterieakkumulatoren, Supercaps oder dergleichen in Betracht. Die aufgezählten oder andere Energiespeicher können in einem Submodul einzeln auftauchen oder aber mehrere von ihnen sind in Reihe geschaltet. Auf diese Reihenschaltung wird im Rahmen der hier vorliegenden Erfindung mit dem Begriff "Energiespeicher" insgesamt Bezug genommen.

Zweckmäßigerweise ist der Energiespeicher mit einer Ladeeinheit zum Aufladen des Energiespeichers verbunden. Bevorzugt ist der Energiespeicher an ein Versorgungsnetz anschließbar. Dies erfolgt zweckmäßigerweise über eine Ladeeinheit, die im Rahmen der Erfindung grundsätzlich beliebig ausgestaltet sein kann. Wesentlich ist jedoch, dass über die Ladeeinheit dem Versorgungsnetz Energie entnommen und in dem Energiespeicher gespeichert werden kann. Diese Energie ermöglicht dann den Stromfluss zur Sättigung der jeweiligen Hochspannungswicklung.

Zweckmäßigerweise sind Zusatzwicklungen vorgesehen, die induktiv mit den Hochspannungswicklungen gekoppelt sind, wobei die Zusatzwicklungen mit wenigstens einem kapazitiv wirkenden Bauteil verschaltet sind. Die Zusatzwicklungen sind im Rahmen der Erfindung mit wenigstens einer der Hochspannungswicklungen des FVSR induktiv gekoppelt. Dabei sind die Zusatzwicklungen mit einem kapazitiv wirkenden Bauteil verschaltet. Mit dem Begriff "verschaltet" ist gemeint, dass jedes kapazitiv wirkende Bauteil galvanisch entweder direkt oder über ein elektrisches Bauteil, wie beispielsweise eine Schalteinheit mit wenigstens einer der Zusatzwicklungen verbunden ist. Das kapazitive Bauteil, beispielsweise ein Kondensator oder eine mit Kondensatoren ausgerüstete "Flexible AC Transmission System" (FACTS) - Komponente, wie beispielsweise ein "Static Synchronous Compensator" (STATCOM), kann so Einfluss auf den Grad und Richtung der Blindleistungskompensation nehmen. Dabei kann die Steuerungseinheit die Leistungshalbleiterschalter des FVSR so ansteuern, dass der induktive Effekt der Hochspannungswicklung bei der Blindleistungskompensation nahezu vollständig zurückgefahren wird, so dass lediglich das kapazitive Bauteil seine Wirkung entfaltet und zu einer in Summe kapazitiven Blindleistungskompensation beiträgt. Abweichend hiervon kann die Steuerungseinheit dafür sorgen, dass die induktive Wirkung der Hochspannungswicklungen vollständig zur Wirkung kommt, so dass die Wirkung des kapazitiven Bauteils überlagert wird, so dass in Summe eine induktive Blindleistungskompensation erfolgt.

Zweckmäßigerweise weist das kapazitive Bauteil Kondensator oder eine Kondensatorbatterie auf.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: ein Ausführungsbeispiel von Aspekten der erfindungsgemäßen Vorrichtung in einer schematischen Darstellung,
- Figur 2: die Sättigungsschaltzweige der Vorrichtung gemäß Figur 1,
- Figur 3: ein Ausführungsbeispiel von Aspekten der erfindungsgemäßen Vorrichtung ohne Anschlüsse,
- Figuren 4, und 6: schematisierte Darstellungen von Aspekten der erfindungsgemäßen Vorrichtung,
- Fig. 5: ein nicht zur Erfindung gehörendes Ausführungsbeispiel, und
- Figur 7: ein weiteres Ausführungsbeispiel von Aspekten der erfindungsgemäßen Vorrichtung zeigen.

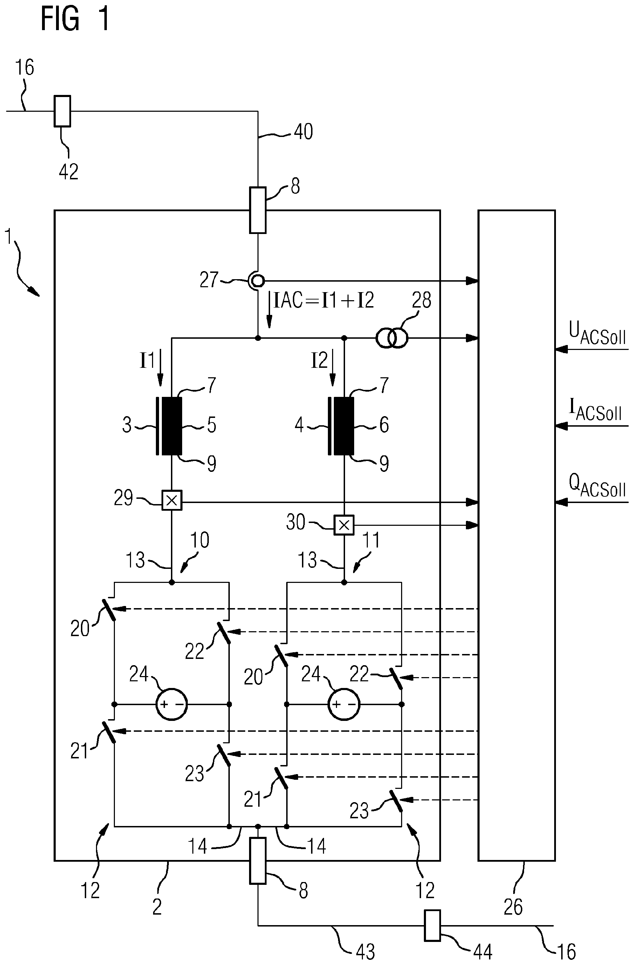

Figur 1 zeigt ein Ausführungsbeispiel der erfindungsgemäßen Vorrichtung 1, die einen mit einem Isolierfluid befüllten Tank 2 aufweist. Als Isolierfluid kommen mineralische Öle, aber auch Esterflüssigkeiten oder dergleichen in Betracht. Auch gasförmige Isolierfluide sind im Rahmen der Erfindung möglich.

Das Isolierfluid stellt zum einen die notwendige Spannungsfestigkeit für Bauteile der Vorrichtung 1, die auf einem Hochspannungspotenzial liegen, gegenüber dem Tank 2 bereit, der auf Erdpotenzial liegt. Darüber hinaus dient das Isolierfluid zur Kühlung der beim Betrieb Wärme entwickelnden Komponenten.

Innerhalb des Tanks 2 ist ein Kern angeordnet, der aus einem magnetisierbaren Material, bevorzugt einem ferromagnetischen Material wie beispielsweise Eisen besteht. Zur Vermeidung von Wirbelströmen, ist der Kern an flächig aneinander anliegenden Eisenblechen, zusammengesetzt. Dabei bildet der Kern einen ersten Kernschenkel 3 sowie einen zweiten Kernschenkel 4 als Kernabschnitte aus.

Der erste Kernschenkel 3 wird von einer ersten Hochspannungswicklung 5 umschlossen. Der zweite Kernschenkel 4 ist von einer zweiten Hochspannungswicklung 6 umgeben. Zur Ausbildung eines geschlossenen Magnet- oder Eisenkreises, die in figürlich nicht dargestellte Joche, die sich von dem oberen Ende des Kernschenkels 3 zum oberen Ende des Kernschenkels 4 sowie vom unteren Ende des Kernschenkels 3 zum unteren Ende des Kernschenkels 4 erstrecken. Darüber hinaus sind zwei figürlich ebenfalls nicht dargestellte Rückflussschenkel vorgesehen, die von keiner Wicklung umgeben sind und sich rechts und links parallel zu den Kernschenkeln 3 beziehungsweise 4 erstrecken. Mit anderen Worten ist ein so genannter 2/2-Kern bereitgestellt.

Die erste Hochspannungswicklung 5 und die zweite Hochspannungswicklung 6 weisen jeweils ein Hochspannungsende 7 auf, mit dem diese mit einer Hochspannungsdurchführung 8 verbunden sind, mit dem die beim Betrieb auf einem Hochspannungspotenzial liegenden Anschlussleitungen durch die auf Erdpotenzial liegende Wandung des Tanks 2 geführt werden.

Die Hochspannungsdurchführung 8 durchgreift dabei die Wand des Tanks und ist an ihrem freien außerhalb des Tanks 2 angeordneten Ende mit einem Freiluftanschluss ausgerüstet. Der figürlich nicht dargestellte Freiluftanschluss dient zum Anschluss eines luftisolierten Leiters 40, über den die Hochspannungswicklungen 5 und 6 mit einem ersten Hochspannungsanschluss 42 verbunden, über den die gesamte Vorrichtung 1 mit einem Phasenleiter 16 eines Hochspannungsversorgungsnetzes verbunden werden kann. Für jeden anderen Phasenleiter des Hochspannungsnetzes, die aus Gründen der Übersicht hier nicht gezeigt sind, verfügt die Vorrichtung 1 über einen identischen Aufbau wie derjenige, der in Figur 1 gezeigt ist. Auch diese Komponenten sind aus Gründen der Übersicht nicht gezeigt. Selbstverständlich sind auch Kabelverbindungen im Rahmen der Erfindung möglich.

An ihren vom ersten Hochspannungsanschluss 42 abgewandten Enden 9 sind die erste Hochspannungswicklung 5 und die zweite Hochspannungswicklung 6 jeweils mit einem Sättigungsschaltzweig 10 beziehungsweise 11 verbunden, wobei jeder Sättigungsschaltzweig 10, 11 ein zweipoliges Submodul 12 aufweist, das mit einer ersten Anschlussklemme 13 und mit der jeweiligen Hochspannungswicklung 5 beziehungsweise 6 und mit einer zweiten Anschlussklemme 14 mit dem Einführende einer Hochspannungsdurchführung 8 verbunden sind, die sich ebenfalls durch die Wand des Tanks 2 erstreckt. Auch diese Hochspannungsdurchführung 8 verfügt über einen Freiluftanschluss, die über eine Anschlussleitung 43 mit einem zweiten Hochspannungsanschluss 44 verbunden ist. In dem gezeigten Ausführungsbeispiel ist der zweite Hochspannungsanschluss 44 ebenfalls mit dem Phasenleiter 16 verbunden. Mit anderen Worten ist die gezeigte erfindungsgemäße Vorrichtung 1 in Reihe in das Versorgungsnetz mit dem Phasenleiter 16 geschaltet.

Wesentlich im Rahmen der Erfindung ist, dass jeder Sättigungsschaltzweig 10 beziehungsweise 11 ein zweipoliges Submodul 12 aufweist, das über eine Brückenschaltung aus Leistungshalbleiterschaltern 20, 21, 22 und 23 und eine Gleichspannungsquelle 24 verfügt, die bevorzugt unipolar ausgebildet ist und somit einen festen Plus- und einen festen Minuspol aufweist.

Die Brückenschaltung kann im Rahmen der Erfindung eine Halbbrücke oder eine Vollbrücke sein. In Figur 1 verfügt jedes Submodul über eine Vollbrücke und umfasst vier Leistungshalbleiterschalter 20, 21, 22 und 23. Eine Halbbrücke umfasst lediglich zwei der Leistungshalbleiterschalter. Zum zweckmäßigen Ansteuern der vier Leistungshalbleiterschalter 20, 21, 22 und 23 ist eine Steuerungseinheit 26 vorgesehen, die eingangsseitig mit Sollwerten für die Spannung U_{ACSoll}, den Wechselstrom I_{ACSoll} und die Blindleistung Q_{ACSoll} versorgt werden kann. Zum Erfassen des von dem Phasenleiter 16 zu den Hochspannungswicklungen fließenden Wechselstromes I_{AC} dient ein Stromsensor 27, wobei ein Spannungssensor 28 die hochspannungsseitig der Hochspannungswicklungen 5 und 6 abfallende Spannung erfasst. Der Stromsensor 27 und der Spannungssensor 28 sind über figürlich nicht dargestellte Signalleitungen mit der Steuerungseinheit 26 verbunden. An der Niederspannungsseite der Hochspannungswicklung 5 beziehungsweise 6 sind ebenfalls Sensoren 29 und 30 erkennbar, die ebenfalls über Signalleitungen mit der Steuerungseinheit 26 verbunden sind und Ströme erfassen, die zwischen dem jeweiligen Submodul 12 und der jeweiligen Hochspannungswicklung 5 beziehungsweise 6 fließen. Die Leistungshalbleiterschalter 20, 21, 22 und 23 eines Submoduls 12 können durch zweckmäßige Ansteuersignale, die durch gestrichelte Linien dargestellt sind, von der Steuerungseinheit 26 von einer Trennstellung, in welcher ein Stromfluss über die Leistungshalbleiterschalter unterbrochen ist, in eine Durchgangsstellung, in der ein Stromfluss über die Leistungshalbleiterschalter möglich ist oder umgekehrt von der Durchgangsstellung in die Trennstellung überführt werden.

Die Betriebsweise der Vorrichtung 1 ist wie folgt: Ist die von dem Spannungssensor 28 erfasste Spannung positiv, sind die Leistungshalbleiterschalter 22 und 23 des Sättigungsschaltzweigs 10 geschlossen. Es sei an dieser vorausgesetzt, dass der Kernschenkel 3 zuvor durch ein von dem Submodul 12 des ersten Sättigungsschaltzweigs 10 zur Hochspannungswicklung 5 fließenden Gleichstroms gesättigt wurde, so dass für die positive Halbwelle der Wechselspannung der Wechselwiderstand der Hochspannungswicklung 5 kleiner ist als der Wechselwiderstand der Hochspannungswicklung 6. Somit fließt nahezu der gesamte Wechselstrom I_{AC} über den mit I₁ bezeichneten Strompfad zum zweiten Hochspannungsanschluss 44 hin. In der positiven Halbwelle der Wechselspannung werden daher die Leistungshalbleiterschalter 21 und 22 geschlossen, so dass die Gleichspannungsquelle 24 des Sättigungsschaltkreises 11 einen Gleichstrom treibt, der von der Hochspannungswicklung 6 zum zweiten Hochspannungsanschluss 44 fließt. Während der positiven Halbwelle der Wechselspannung im Phasenleiter 16 kann somit der zweite Kernschenkel in der gewünschten Weise gesättigt werden.

Während der negativen Halbwelle, in der die von dem Sensor 28 gemessene Spannung negativ ist, fließt ein Wechselstrom I_{AC} hingegen im Wesentlichen über die zweite Hochspannungswicklung 6, so dass durch Schließen der Leistungshalbleiterschalter 20 und 23 und Öffnen der Leistungshalbleiterschalter 21 und 22 des Submoduls 12 des ersten Sättigungsschaltzweigs 10 ein Sättigungsgleichstrom erzeugt wird, der von dem Submodul 12 zur ersten Hochspannungswicklung 5 oder umgekehrt fließt und so für die gewünschte Sättigung des Kernschenkels 3 sorgt.

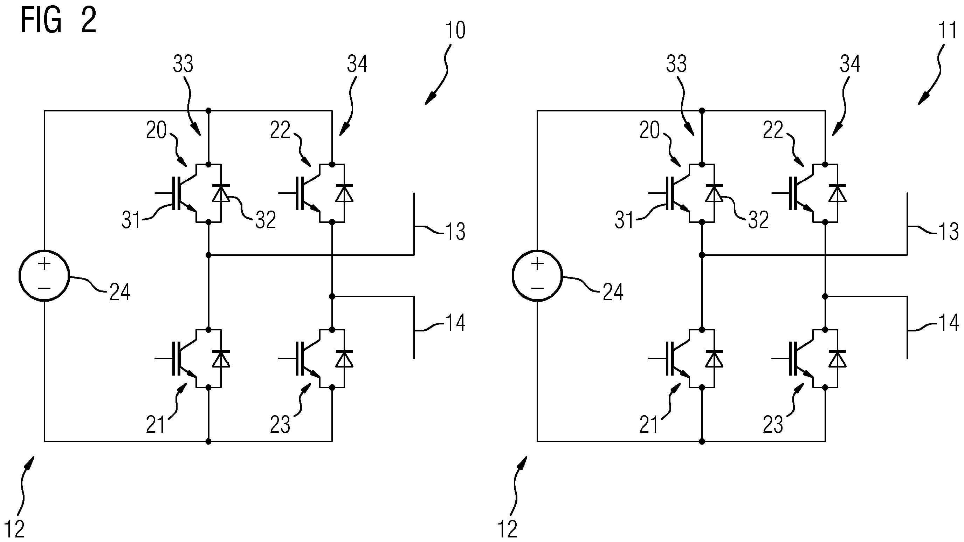

Figur 2 zeigt den Aufbau der Submodule 12 des ersten und zweiten Sättigungsschaltkreises 10, 11 genauer. Es ist erkennbar, dass die Submodule für beide Sättigungsschaltzweige 10 beziehungsweise 11 identisch aufgebaut sind. Es ist ferner erkennbar, dass die Leistungshalbleiterschalter 20, 21, 22 und 23 einen so genannten IGBT 31 umfassen, dem eine Freilaufdiode 32 gegensinnig parallel geschaltet ist. Der Aufbau eines IGBTs mit Freilaufdiode ist grundsätzlich bekannt, so dass an dieser Stelle auf deren Wirkungsweise nicht genauer eingegangen zu werden braucht. Wesentlich ist, dass die Freilaufdiode 32 zum Schutz des IGBTs über Spannungen in Rückwärtsrichtung dient. Dabei sind IGBT 31 und Dioden 32 in einem gemeinsamen Schaltergehäuse untergebracht. IGBT 31 und Freilaufdiode 32 werden hier gemeinsam als Leistungshalbleiterschalter bezeichnet.

Jedes Submodul 12 ist als so genannte Vollbrücke ausgebildet und umfasst einen ersten Reihenschaltungszweig 32 und einen zweiten Reihenschaltungszweig 34 aus jeweils zwei in Reihe geschalteten Leistungshalbleiterschaltern 20, 21 beziehungsweise 22 und 23. Der Potenzialpunkt zwischen Leistungshalbleiterschaltern 20 und 21 ist mit der ersten Anschlussklemme 13 und der Potenzialpunkt zwischen den Leistungshalbleiterschaltern 22 und 23 des zweiten Reihenschaltungszweigs 34 mit der Anschlussklemme 14 des Submoduls 12 verbunden.

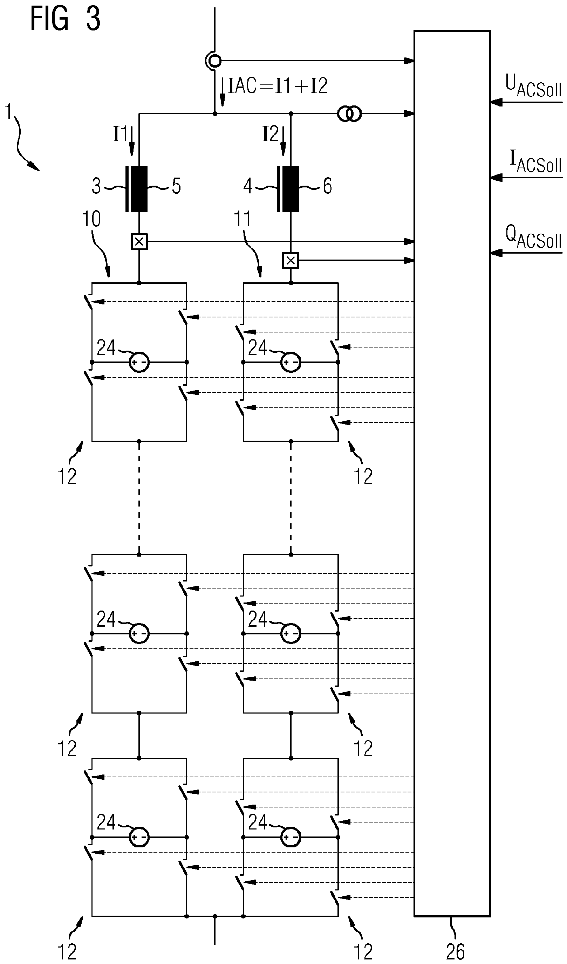

Figur 3 zeigt ein weiteres Ausführungsbeispiel der erfindungsgemäßen Vorrichtung 1, wobei aus Gründen der Übersicht lediglich die Bauteile zur Verbindung mit einer Phase des Hochspannungsnetzes gezeigt sind. Weiterhin sind die Hochspannungsanschlüsse 42 und 44 sowie der Tank 2 mit den Hochspannungsdurchführungen 8 nicht gezeigt.

Es ist erkennbar, dass jeder Sättigungsschaltzweig 10 beziehungsweise 11 aus einer Reihenschaltung aus mehreren Submodulen 12 besteht, die von der Steuerungseinheit 26 entweder alle identisch oder unterschiedlich angesteuert werden, so dass die Gleichspannung zum Erzeugen des zur Sättigung der Kernschenkel 3, 4 dienenden Gleichstroms den jeweiligen Anforderungen entsprechend skalierbar ist.

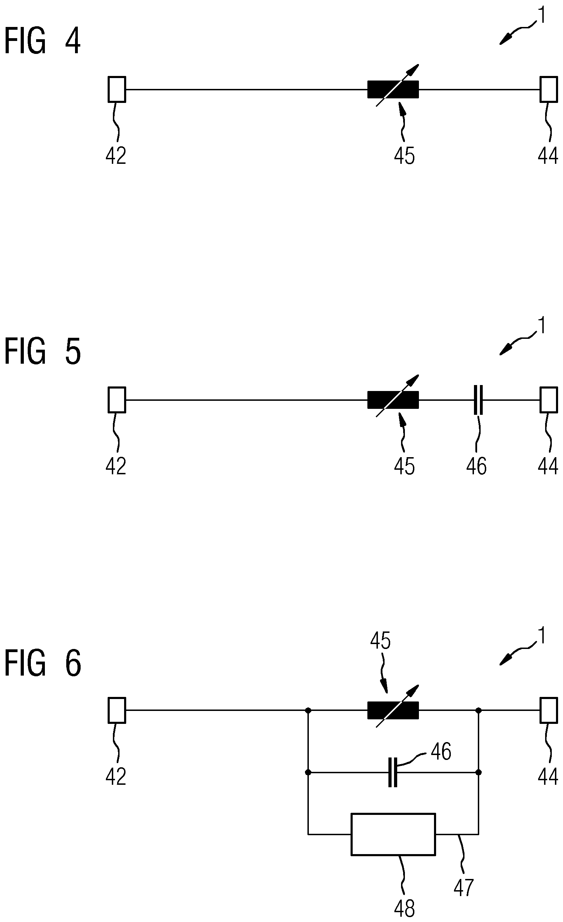

Figur 4 zeigt eine noch weiter schematisierte Darstellung der Vorrichtung 1. Es ist lediglich der so genannte FVSR 45 gezeigt. Der FVSR 45 umfasst die Hochspannungswicklungen, den Kern sowie den oder die Sättigungsschaltzweige 10 beziehungsweise 11 sowie die Steuerungseinheit zum Ansteuern der Leistungshalbleiterschalter. Figur 4 kann daher auch als eine weiter schematisierte Darstellung des Ausführungsbeispiels gemäß Figur 1 aufgefasst werden.

Figur 5 zeigt ein weiteres, nicht zur Erfindung gehöriges Ausführungsbeispiel der Vorrichtung 1, wobei neben dem FVSR 45 ein Kondensator 46 beziehungsweise eine Kondensatorbatterie 46 verdeutlicht ist. Dabei ist der Kondensator 46 zwischen dem zweiten Hochspannungsanschluss 44 und dem FVSR 45 angeordnet. Durch den Kondensator 46 ist der Regelbereich der erfindungsgemäßen Vorrichtung 1 vergrößert. In der Regel wirken die Hochspannungsleitungen eines Energieversorgungsnetzes, das mit Wechselstrom betrieben wird, wie ein Kondensator. Zur Blindleistungskompensation muss daher ein induktiv wirkendes Bauteil, wie die erfindungsgemäßen Hochspannungswicklungen, in das Netz integriert werden. Durch das Vorsehen eines Kondensators 46 ist es jedoch auch möglich, induktive Blindleistung im Netz zu kompensieren.

Figur 6 zeigt Aspekte der erfindungsgemäßen Vorrichtung 1, wobei der Kondensator 46 dem FVSR 45 mit Hilfe eines Überbrückungszweiges parallel geschaltet ist. Darüber hinaus ist ein Schutzzweig 47 vorgesehen, in dem ein nichtlinearer Widerstand 48 angeordnet ist. Der nichtlineare Widerstand dient zum Schutz des FVSR 45 sowie des Kondensators 46 vor Überspannungen. Wie bereits ausgeführt wurde, ist der nichtlineare Widerstand 48 bei Betriebsspannung hochohmig. Bei Überspannungen sinkt der ohmsche Widerstand jedoch schnell ab, so dass der Strom auf den Schutzzweig 47 kommutiert.

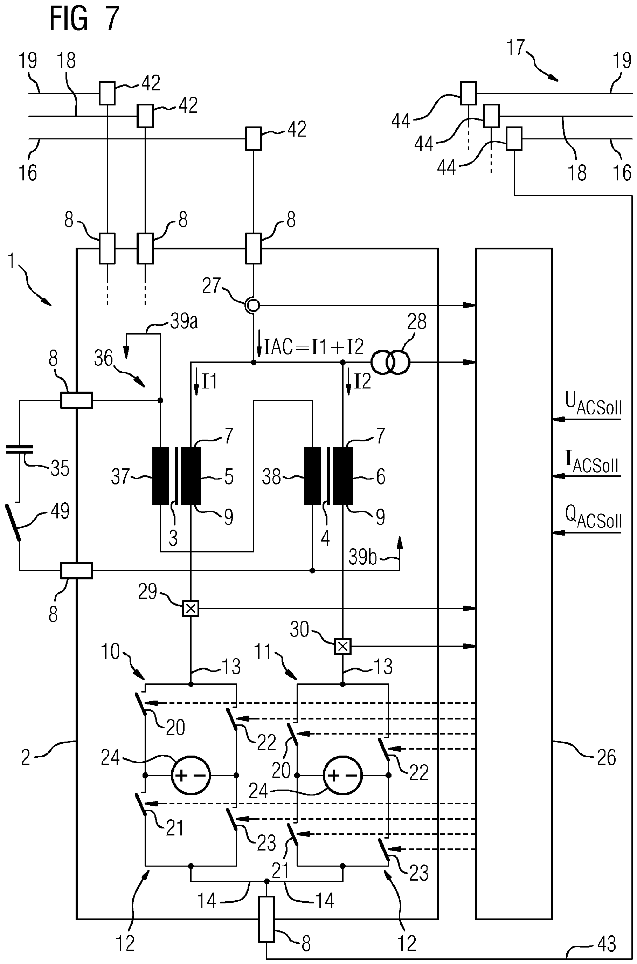

Figur 7 zeigt ein weiteres Ausführungsbeispiel der erfindungsgemäßen Vorrichtung 1, die dem im Zusammenhang mit Figur 1 gezeigten Ausführungsbeispiel zum Teil entspricht. Neben den in Figur 1 bereits beschriebenen Bauteilen oder Elementen verfügt das in Figur 7 gezeigte Ausführungsbeispiel der Vorrichtung 1 auch über ein kapazitiv wirkendes Bauteil, das in dem gezeigten Ausführungsbeispiel als Kondensator 35 ausgeführt ist. Der Kondensator 35 ist einer Ausgleichswicklung 36 parallel geschaltet ist, wobei die Ausgleichswicklung 36 aus zwei Teilausgleichswicklungen 37 und 38 besteht, die zueinander in Reihe geschaltet sind. Die Teilausgleichswicklung 37 ist induktiv mit der ersten Hochspannungswicklung und die zweite Teilausgleichswicklung 38 mit der Hochspannungswicklung 6 induktiv gekoppelt. Dabei sind die Hochspannungswicklungen 5 beziehungsweise 6 und die jeweilige Teilausgleichswicklung 37 beziehungsweise 38 konzentrisch zueinander angeordnet, wobei sie den gleichen Kernabschnitt 3 beziehungsweise 4 des ansonsten nicht weiter verdeutlichten Kerns umschließen. In Figur 7 ist lediglich eine Zusatzwicklung 36 für die dort gezeigte Phase verdeutlicht. In dem Tank 2 sind jedoch für die anderen Phasen weitere Ausgleichswicklungen vorgesehen, die identisch aufgebaut und auf die gleiche Art und Weise mit dem Kondensator 35 verschaltet sind. Dabei sind die Ausgleichswicklungen 36 der unterschiedlichen Phasen miteinander in einer Dreiecksschaltung verbunden. Diese Dreiecksschaltung ist durch Pfeile 39a beziehungsweise 39b angedeutet. In dem Parallelzweig der Ausgleichswicklung, in welcher der Kondensator 35 angeordnet ist, ist ferner ein Schalter 49 schematisch dargestellt, der in dem gezeigten Ausführungsbespiel zwei gegensinnig parallel geschaltete Thyristoren umfasst. Mit Hilfe des elektronischen Schalters 49 kann der Kondensator 35 der Ausgleichswicklung 36 parallel geschaltet werden oder die Wirkung des kapazitiv wirkenden Bauteils 35 unterdrückt werden.

Der Kondensator 35 ist in Figur 7 als einzelner Kondensator dargestellt, der außerhalb des Tanks 2 des FVSR angeordnet ist. Der Kondensator 35 umfasst jedoch eine Anzahl von in Reihe oder parallel zueinander angeordneten Kondensatoren und kann daher auch als Kondensatorbatterie bezeichnet werden. Dabei ist die Anzahl der parallel oder in Reihe geschalteten Kondensatoren von den jeweiligen Anforderungen abhängig, wobei die kapazitive Wirkung erhöht oder herabgesetzt werden kann.

Der Kondensator oder mit anderen Worten die Kondensatorbatterie 35 ist wie der Schalter 49 außerhalb des Tanks 2 des FVSR angeordnet. Abweichend hiervon ist natürlich auch die Anordnung in einem gemeinsamen Tank möglich. Um eine elektrische Verbindung zwischen der Ausgleichswicklung 36 in dem Tank 2 zu ermöglichen, sind wieder zweckmäßige Durchführungen 8 vorgesehen, die ein spannungsfestes Durchführen der Hochspannungsleitungen durch die Wand des Tanks 2, die auf Erdpotenzial liegt, ermöglichen.

## Patentansprüche

1. Vorrichtung (1) zur Blindleistungskompensation in einem wenigstens einen Phasenleiter (16) aufweisenden Hochspannungsnetz (17) mit wenigstens einem ersten Hochspannungsanschluss (42), der zur Verbindung mit jeweils einem Phasenleiter (16) eingerichtet ist, wobei für jeden ersten Hochspannungsanschluss (42)
- ein erster und ein zweiter Kernabschnitt (3,4) , die Teil eines geschlossenen Magnetkreises sind,
- eine erste Hochspannungswicklung (5), die den ersten Kernabschnitt (3) umschließt und
- eine zweite Hochspannungswicklung (6), die den zweiten Kernabschnitt (4) umschließt und parallel zur ersten Hochspannungswicklung (5) geschaltet ist,
- wenigstens ein Sättigungsschaltzweig (10,11), der zum Sättigen der Kernabschnitte (3,4) eingerichtet ist und ansteuerbare Leistungshalbleiterschalter (20,21,22,23) aufweist, und
- eine Steuerungseinheit zum Ansteuern der Leistungshalbleiterschalter vorgesehen sind,
wobei die erste und die zweite Hochspannungswicklung mit ihrem Hochspannungsende (7) mit dem zugeordneten ersten Hochspannungsanschluss (42) verbunden und an ihrer Niederspannungsseite (9) mit einem oder dem Sättigungsschaltzweig (10,11) verbindbar sind,
**dadurch gekennzeichnet, dass** ein zweiter Hochspannungsanschluss (44) vorgesehen ist, der ebenfalls zur Verbindung mit jeweils einem Phasenleiter (16) vorgesehen ist, wobei der Sättigungsschaltzweig (10,11) an seiner von den oder der Hochspannungswicklung (5,6) abgewandten Seite mit dem zweiten Hochspannungsanschluss (44) verbunden ist, so dass die Vorrichtung (1) in Reihe in den jeweiligen Phasenleiter (16) schaltbar ist, und dass die Hochspannungswicklungen (5,6) und der Sättigungsschaltzweig (10,11) durch einen Überbrückungszweig überbrückbar sind, wobei in dem Überbrückungszweig eine kapazitive Einheit (46) angeordnet ist, wobei dem Überbrückungszweig ein Schutzzweig (47) parallel geschaltet ist, in dem ein nichtlinearer Widerstand (48) angeordnet ist.

2. Vorrichtung (1) nach Anspruch 1,
**dadurch gekennzeichnet, dass** der zweite Hochspannungsanschluss (44) über wenigstens eine kapazitive Einheit (46) mit dem Sättigungsschaltzweig (10,11) verbunden ist.

3. Vorrichtung (1) nach einem der vorhergehenden Ansprüche,
**dadurch gekennzeichnet, dass** die kapazitive Einheit als Kondensator (46) oder Kondensatorbatterie (46) ausgerüstet ist.

4. Vorrichtung (1) nach einem der vorhergehenden Ansprüche,
**dadurch gekennzeichnet, dass** jede Hochspannungswicklung (5,6) und jeder Sättigungsschaltzweig (10,11) in einem mit einem Isolierfluid befüllten Tank (2) angeordnet sind.

5. Vorrichtung (1) nach einem der vorhergehenden Ansprüche,
**dadurch gekennzeichnet, dass** jeder Sättigungsschaltzweig (10,11) wenigstens ein zweipoliges Submodul (12) mit einer Brückenschaltung aufweist, die über Leistungshalbleiterschalter (20,21,22,23) und eine Gleichspannungsquelle (24) verfügt, so dass je nach Ansteuerung der Leistungshalbleiterschalter (20,21,22,23) die Gleichspannungsquelle entweder in Reihe zu wenigstens einer Hochspannungswicklung (10,11) schaltbar oder überbrückbar ist.

6. Vorrichtung (1) nach Anspruch 5,
**dadurch gekennzeichnet, dass** jedes Submodul (12) eine Vollbrückenschaltung ausbildet, die einen ersten Reihenschaltungszweig (33) und einen zweiten Reihenschaltungszweig (34) aufweist, die der Gleichspannungsquelle (24) jeweils parallel geschaltet sind, jeder Reihenschaltungszweig (33,34) eine Reihenschaltung aus zwei Leistungshalbleiterschaltern (20,21,22,23) aufweist, wobei der Potenzialpunkt zwischen den Leistungshalbleiterschaltern (20,21) des ersten Reihenschaltungszweigs (33) mit einer ersten Anschlussklemme (13) des Submoduls (12) und der Potenzialpunkt zwischen den Leistungshalbleiterschaltern (22,23) des zweiten Reihenschaltungszweigs (34) mit der zweiten Anschlussklemme (14) des Submoduls (12) verbunden ist.

7. Vorrichtung (1) nach Anspruch 5 oder 6,
**dadurch gekennzeichnet, dass** jeder Leistungshalbleiterschalter (20,21,22,23) ein IGBT (31) mit gegensinnig parallel geschalteter Freilaufdiode (32), ein GTO oder ein Transistorschalter ist.

8. Vorrichtung (1) nach einem der Ansprüche 5 bis 7,
**dadurch gekennzeichnet, dass** jede Gleichspannungsquelle (24) einen Energiespeicher umfasst.

9. Vorrichtung (1) nach Anspruch 8,
**dadurch gekennzeichnet, dass** der Energiespeicher an ein Versorgungsnetz anschließbar ist.

10. Vorrichtung (1) nach einem der vorhergehenden Ansprüche,
**dadurch gekennzeichnet, dass** Ausgleichswicklungen (36) vorgesehen sind, die induktiv mit den Hochspannungswicklungen (5,6) gekoppelt sind, wobei die Ausgleichswicklungen (36) mit wenigstens einem kapazitiv wirkenden Bauteil (35) verschaltet sind.

11. Vorrichtung (1) nach Anspruch 1,
**dadurch gekennzeichnet, dass** das kapazitiv wirkende Bauteil Kondensatoren (46) aufweist.

## Claims

1. Apparatus (1) for reactive power compensation in a high-voltage network (17) having at least one phase conductor (16), having at least one first high-voltage connection (42) which is configured for connection to in each case one phase conductor (16), wherein
- a first and a second core section (3, 4) which are part of a closed magnetic circuit,
- a first high-voltage winding (5) which surrounds the first core section (3) and
- a second high-voltage winding (6) which surrounds the second core section (4) and is connected in parallel with the first high-voltage winding (5),
- at least one saturation switching branch (10, 11) which is configured to saturate the core sections (3, 4) and has controllable power semiconductor switches (20, 21, 22, 23), and
- a control unit for controlling the power semiconductor switches are provided for each first high-voltage connection (42),
wherein the first and second high-voltage windings are connected, by way of their high-voltage end (7), to the associated first high-voltage connection (42) and can be connected, on their low-voltage side (9), to a or the saturation switching branch (10, 11),
**characterized in that**
a second high-voltage connection (44) is provided and is likewise provided for connection to in each case one phase conductor (16), wherein the saturation switching branch (10, 11) is connected, on its side facing away from the high-voltage winding(s) (5, 6), to the second high-voltage connection (44), with the result that the apparatus (1) can be connected in series with the respective phase conductor (16), and **in that** the high-voltage windings (5, 6) and the saturation switching branch (10, 11) can be bridged by means of a bridging branch, wherein a capacitive unit (46) is arranged in the bridging branch, wherein a protective branch (47), in which a non-linear resistor (48) is arranged, is connected in parallel with the bridging branch.

2. Apparatus (1) according to Claim 1,
**characterized in that**
the second high-voltage connection (44) is connected to the saturation switching branch (10, 11) via at least one capacitive unit (46).

3. Apparatus (1) according to one of the preceding claims, **characterized in that**
the capacitive unit is in the form of a capacitor (46) or a capacitor bank (46).

4. Apparatus (1) according to one of the preceding claims, **characterized in that**
each high-voltage winding (5, 6) and each saturation switching branch (10, 11) are arranged in a tank (2) filled with an insulating fluid.

5. Apparatus (1) according to one of the preceding claims, **characterized in that**
each saturation switching branch (10, 11) has at least one two-pole submodule (12) with a bridge circuit which has power semiconductor switches (20, 21, 22, 23) and a DC voltage source (24), with the result that the DC voltage source can be either connected in series with at least one high-voltage winding (10, 11) or bridged depending on the control of the power semiconductor switches (20, 21, 22, 23).

6. Apparatus (1) according to Claim 5,
**characterized in that**
each submodule (12) forms a full-bridge circuit having a first series circuit branch (33) and a second series circuit branch (34) which are each connected in parallel with the DC voltage source (24), each series circuit branch (33, 34) has a series circuit comprising two power semiconductor switches (20, 21, 22, 23), wherein the potential point between the power semiconductor switches (20, 21) of the first series circuit branch (33) is connected to a first connection terminal (13) of the submodule (12) and the potential point between the power semiconductor switches (22, 23) of the second series circuit branch (34) is connected to the second connection terminal (14) of the submodule (12).

7. Apparatus (1) according to Claim 5 or 6,
**characterized in that**
each power semiconductor switch (20, 21, 22, 23) is an IGBT (31) with a freewheeling diode (32) connected in parallel in an opposite sense, a GTO or a transistor switch.

8. Apparatus (1) according to one of Claims 5 to 7, **characterized in that**
each DC voltage source (24) comprises an energy store.

9. Apparatus (1) according to Claim 8,
**characterized in that**
the energy store can be connected to a supply network.

10. Apparatus (1) according to one of the preceding claims, **characterized in that**
compensation windings (35) are provided and are inductively coupled to the high-voltage windings (5, 6), wherein the compensation windings (36) are connected to at least one capacitively acting component part (35).

11. Apparatus (1) according to Claim 1,
**characterized in that**
the capacitively acting component part has capacitors (46).

## Revendications

1. Montage (1) de compensation de la puissance réactive dans un réseau (17) de haute tension ayant au moins un conducteur (16) de phase et au moins une première borne (42) de haute tension, qui est conçue pour la liaison à respectivement un conducteur (16) de phase, dans lequel pour chaque première borne (42) de haute tension, sont prévus
- une première et une deuxième parties (3, 4) de noyau, qui font partie d'un circuit magnétique fermé,
- un premier enroulement (5) de haute tension, qui entoure la première partie (3) de noyau, et
- un deuxième enroulement (6) de haute tension, qui entoure la deuxième partie (4) de noyau et qui est monté en parallèle avec le premier enroulement (5) de haute tension,
- au moins une branche (10, 11) de coupure par saturation, qui est conçue pour saturer les parties (3, 4) de noyau et qui a des interrupteurs (20, 21, 22, 23) à semiconducteur de puissance, et
- une unité de commande pour commander les interrupteurs à semiconducteur de puissance,
dans lequel le premier et le deuxième enroulements de haute tension sont reliés par leur extrémité (7) de haute tension à la première borne (42) de haute tension associée et peuvent être reliés sur leur côté (9) de basse tension à une ou à la branche (10, 11) de coupure par saturation,
**caractérisé en ce qu'**
il est prévu une deuxième borne (44) de haute tension, qui est prévue également pour la liaison avec respectivement un conducteur (16) de phase, dans lequel la branche (10, 11) de coupure par saturation est reliée sur son côté non tourné vers la ou les enroulements (5, 6) de haute tension à la deuxième borne (44) de haute tension, de manière à monter le montage (1) en série dans le conducteur (16) de phase respectif, et **en ce que** les enroulements (5, 6) de haute tension et la branche (10, 11) de coupure par saturation peuvent être shuntés par une branche de shuntage, dans lequel il est monté, dans la branche de shuntage, une unité (46) capacitive, dans lequel il est monté, en parallèle de la branche de shuntage, une branche (47) de protection, dans lequel est monté une résistance (48) non linéaire.

2. Montage (1) suivant la revendication 1,
**caractérisé en ce que**
la deuxième borne (44) de haute tension est reliée à la branche (10, 11) de coupure par saturation par l'intermédiaire d'au moins une unité (46) capacitive.

3. Montage (1) suivant l'une des revendications précédentes, **caractérisé en ce que** l'unité capacitive est sous la forme d'un condensateur (46) ou d'une batterie (46) de condensateur.

4. Montage (1) suivant l'une des revendications précédentes, **caractérisé en ce que**
chaque enroulement (5, 6) de haute tension et chaque branche (10, 11) de coupure par saturation sont disposés dans une cuve (2) remplie d'un fluide isolant.

5. Montage (1) suivant l'une des revendications précédentes, **caractérisé en ce que**
chaque branche (10, 11) de coupure par saturation a au moins une sous-module (12) bipolaire ayant un circuit en pont, qui dispose d'interrupteurs (20, 21, 22, 23) à semiconducteur de puissance et d'une source (24) de tension continue, de manière à ce que, après commande des interrupteurs (20, 21, 22, 23) à semiconducteur de puissance, la source de tension continue puisse être montée en série avec au moins un enroulement (10, 11) de haute tension ou être shuntée.

6. Montage (1) suivant la revendication 5,
**caractérisé en ce que**
chaque sous-module (12) constitue un circuit en pont complet, qui a une première branche (33) de circuit en série et une deuxième branche (34) de circuit en série, qui sont montées respectivement en parallèle avec la source (24) de tension continue, chaque branche (33, 34) de circuit en série ayant un circuit série composé de deux interrupteurs (20, 21, 22, 23) à semiconducteur de puissance, le point de potentiel entre les interrupteurs (20, 21) à semiconducteur de puissance de la première branche (33) de circuit en série étant relié à une première borne (13) de connexion du sous-module (12) et le point de potentiel entre les interrupteurs (22, 23) à semiconducteur de puissance de la deuxième branche (34) de circuit en série étant relié à la deuxième borne (14) de connexion du sous-module (12).

7. Montage (1) suivant la revendication 5 ou 6,
**caractérisé en ce que**
chaque interrupteur (20, 21, 22, 23) à semiconducteur de puissance est un IGBT (31) ayant une diode (32) de roue libre montée en parallèle tête bêche, un GTO ou un interrupteur à transistor.

8. Montage (1) suivant l'une des revendications 5 à 7, **caractérisé en ce que**
chaque source (24) de tension continue comprend un accumulateur d'énergie.

9. Montage (1) suivant la revendication 8,
**caractérisé en ce que**
l'accumulateur d'énergie peut être raccordé à un réseau d'alimentation.

10. Montage (1) suivant l'une des revendications précédentes, **caractérisé en ce qu'**
il est prévu des enroulements (36) de compensation, qui sont couplés inductivement aux enroulements (5, 6) de haute tension, les enroulements (36) de compensation étant connectés à au moins un élément (35) agissant capacitivement.

11. Montage (1) suivant la revendication 10,
**caractérisé en ce que**
l'élément agissant capacitivement a des condensateurs (46).
